# FASCICULE DE BREVET EUROPEEN

(11) **EP 1 407 169 B1**
(45) Date de publication et mention de la délivrance du brevet: **16.11.2005**
(21) Numéro de dépôt: 02741089.3
(22) Date de dépôt: 05.07.2002
(51) Int. Cl.: F16H 25/22

(54) **DISPOSITIF VIS-ECROU A BILLES**
KUGELUMLAUFSPINDELMUTTER
BALL SCREW-NUT DEVICE

(30) Priorité: 13.07.2001 EP 01810700
(43) Date de publication de la demande: 14.04.2004
(73) Titulaire: Société Industrielle de Sonceboz S.A., 2605 Sonceboz (CH)
(72) Inventeur: PFISTER, Jean-François, CH-2605 Sonceboz (CH)
(74) Mandataire: Reuteler, Raymond Werner
(86) Numéro de dépôt international: PCT/IB2002/002664
(87) Numéro de publication internationale: WO 2003/006848

(56) Documents cités:
- WO-A-93/06387
- US-A- 2 581 482
- US-A- 3 826 153

## Description

La présente invention concerne un dispositif vis-écrou à billes.

Dans les dispositifs vis-écrou à billes classiques l'écrou est généralement en métal et les chemins de roulement sont fabriqués notamment au moyen d'un processus d'enlèvement de copeaux, ce qui est relativement coûteux. D'autre part, dans certaines applications, l'inertie élevée de l'écrou en métal est un inconvénient.

Il y aurait un avantage à diminuer le coût de fabrication des dispositifs de vis-écrou à billes. Pour certaines applications, il y aurait un avantage à diminuer la masse de l'écrou. Pour certaines applications, il y aurait avantage à réduire l'encombrement de l'écrou.

Le document WO 93/06387 décrit un dispositif vis-écrou à billes dont l'écrou comporte un boîtier et un dispositif de roulements à billes avec un chemin de roulement en tôle assemblé avec le boîtier.

Un but de l'invention est de réaliser un dispositif vis-écrou à billes performant, fiable et peu coûteux.

Il est avantageux de réaliser un dispositif vis-écrou à billes qui est adapté à la fabrication en série, notamment en évitant les opérations d'enlèvement de copeaux ou d'autres procédés d'usinage coûteux.

Il est en outre avantageux de réaliser un dispositif vis-écrou à billes pour lequel le choix des matériaux de l'écrou est plus large de manière à pouvoir adapter le choix à l'application particulière, par exemple pour permettre une réduction de la masse de l'écrou ou pour conférer une flexibilité dans la conception de la forme.

Il est en outre avantageux de réaliser un dispositif vis-écrou à billes ayant un faible encombrement

Des buts de l'invention ont été réalisés par un dispositif vis-écrou à billes selon la revendication 1.

Le dispositif vis-écrou à billes comprend une vis et un écrou, l'écrou comportant un boîtier et un dispositif de roulement à billes comprenant un chemin de roulement et une pluralité de billes, le dispositif de roulement à billes étant fabriqué en tant que partie indépendante qui est assemblée avec le boîtier.

Avantageusement, cette construction permet de réduire les coûts de fabrication et d'augmenter le choix des matériaux utilisables pour le boîtier de l'écrou tout en assurant la fiabilité du dispositif. Par exemple, le processus d'usinage du chemin de roulement par enlèvement de copeaux relativement coûteux peut être remplacé par un processus de fabrication du boîtier et du chemin de roulement indépendant suivi par un assemblage.

Le chemin de roulement à billes et le chemin de recirculation des billes forment ensemble un chemin essentiellement sous forme d'un "8".

Le boîtier comprend au moins une première partie de boîtier et une seconde partie de boîtier fixées ensemble, le dispositif de roulement à billes étant disposé dans une interface entre les deux parties de boîtier. Avantageusement, la disposition du dispositif de roulement à billes dans l'interface entre les deux parties du boîtier assure un assemblage automatisé aisé des parties constitutives et contribue par conséquent à la réduction des coûts.

Le boîtier peut être réalisé en une matière plastique, ce qui permet de réduire la masse du dispositif et de lui conférer une certaine flexibilité au niveau de sa forme, ce qui lui assurera un domaine d'utilisation étendu.

Avantageusement, cette construction permet de réaliser un dispositif vis-écrou très compact, notamment en longueur axiale.

Le chemin de roulement est de préférence formé en tôle emboutie qui peut être durcie par une opération de trempe. Avantageusement, le choix de la tôle emboutie pour le chemin de roulement assure une fabrication en série peu coûteuse tout en assurant que la résistance du chemin de roulement vis-à-vis de la pression exercée par les billes est suffisante.

Le chemin de roulement peut être fabriqué d'au moins deux parties de paroi d'appui ayant des formes sensiblement identiques, ce qui permet de diminuer le nombre de pièces différentes à fabriquer. Le chemin de roulement peut être essentiellement en forme de spire.

Le dispositif de roulement à billes comprend en outre le chemin de recirculation de billes agencé de manière à assurer la recirculation des billes sur le chemin de roulement. Le chemin de recirculation de billes peut avantageusement être en forme de spire, ce qui permet de réaliser une circulation des billes de manière fiable dans un faible encombrement.

D'autres buts et aspects avantageux de l'invention ressortiront des revendications, de la description et des dessins annexés dans lesquels:

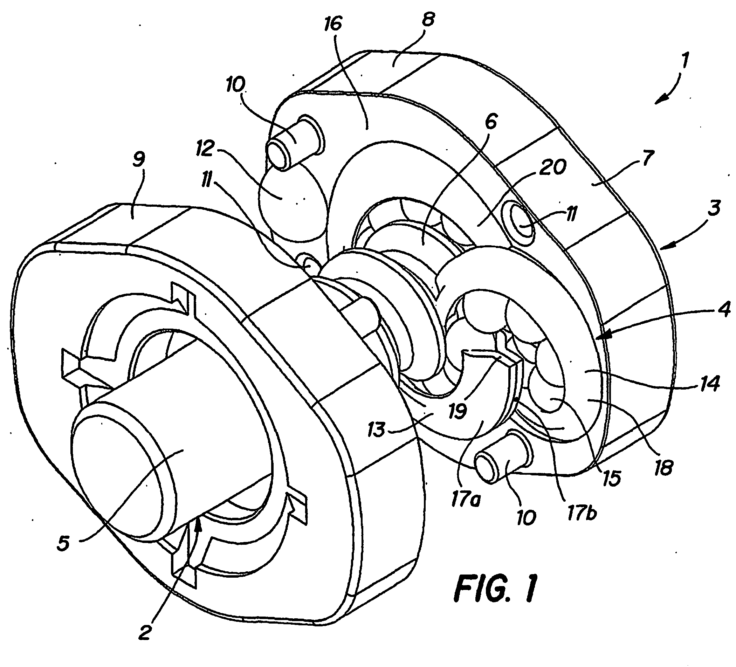

la Fig. 1 est une vue en perspective d'un dispositif vis-écrou à billes selon l'invention, les deux parties de boîtier n'étant pas fixées ensemble ;
la Fig. 2 est une vue en direction d'une extrémité axiale du dispositif vis-écrou à billes selon la Fig. 1 ;
la Fig. 3 est une vue dans la direction de la flèche III de la Fig. 2 ;
la Fig. 4 est une vue en coupe selon la ligne IV-IV de la figure 2 ;
la Fig. 5 est une vue en coupe selon la ligne V-V de la figure 2;
la Fig. 6 est une vue similaire à celle de la figure 2, sans le boîtier de l'écrou ; et
la Fig. 7 est une vue dans la direction de la flèche VII de la Fig. 6.

En faisant référence aux Figures, un dispositif vis-écrou à billes 1 comporte une vis 2, un écrou 3 et des billes 15. La vis 2 comporte un axe de vis 5 de forme générale cylindrique muni d'un filetage 6.

L'écrou 3 comporte un boîtier 7 et un dispositif de roulement de billes 4. Le boîtier comprend au moins une première partie de boîtier 8 et une deuxième partie de boîtier 9. Dans l'exemple représenté, le boîtier 7 est en une matière plastique injectée, de forme sensiblement oblongue ou elliptique, mais la forme du boîtier 7, ses dimensions et le matériau utilisé peuvent être définis en fonction de l'application particulière envisagée. En effet, la séparation du dispositif de roulement à billes, et notamment d'un chemin de roulement de ce dernier, du boîtier de l'écrou, augmente le choix des matériaux utilisables pour fabriquer le boîtier tout en assurant une résistance mécanique et une résistance à l'usure du filetage de l'écrou. Par exemple, le boîtier peut être en matière plastique injectée qui est bien adaptée à la fabrication en série, même pour des formes complexes, et qui permet également de réduire la masse et le coût du dispositif.

Les première et deuxième parties de boîtier 8 et 9 sont fixées ensemble à l'aide d'un moyen de fixation qui, selon l'exemple représenté, comprend des broches de fixation 10 destinées à être logées dans des trous de broche 11 complémentaires. Les broches de fixation 10 sont disposées sur les surfaces se faisant face des première et deuxième parties de boîtier 8 et 9, à raison de deux broches de fixation 10 par partie de boîtier positionnées en périphérie externe, de manière à être sensiblement diamétralement opposées l'une à l'autre.

Une masse d'équilibrage 12 sous forme d'une bille 12 est logée dans un creux entre les parties de boîtier. Cette masse est choisie de manière à pouvoir équilibrer l'inertie de l'écrou en rotation. La masse d'équilibrage 12 peut également servir à assurer la bonne orientation des deux parties de boîtier lors de l'assemblage.

Le chemin de roulement 13 est sensiblement en forme de spire et il comprend au moins deux parties de paroi d'appui 17a, 17b de formes sensiblement identiques, ce qui permet de réduire le nombre de pièces différentes à fabriquer. De préférence, les parties de paroi d'appui 17a, 17b sont formées en tôle emboutie qui peut être durcie par une opération de trempe, ce qui a pour effet de renforcer la résistance mécanique de ces parties vis-à-vis de la pression exercée par les billes 15. Ces parties de paroi d'appui 17a, 17b peuvent donc être fabriquées de manière automatisée en grandes séries puis fixées ensemble, par exemple par soudage, sertissage, rivetage ou autres moyens de fixation. Le chemin de roulement peut également être fabriqué en une seule pièce en tôle emboutie ou par d'autres moyens de fabrication tel que par forge, injection, ou usinage, sans sortir du cadre de l'invention. L'épaisseur des parties de paroi d'appui 17a et 17b dans certaines applications peut être relativement faible pourvu que la résistance du chemin de roulement 13 vis-à-vis de la pression exercée par les billes 15 soit suffisante pour éviter une déformation permanente ou une usure trop rapide des parties de paroi.

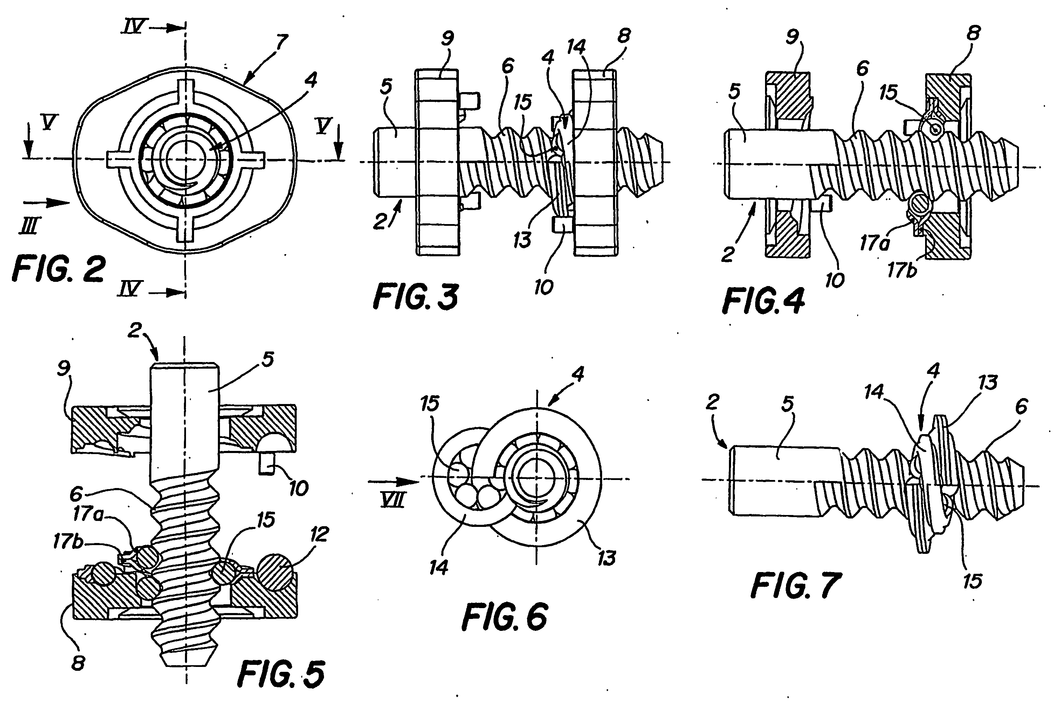

Le dispositif de roulement à billes 4 comprend en outre un chemin de recirculation de billes 14 comportant une partie de paroi d'appui 18 en forme de spire contre laquelle les billes 15 réalisent leur recirculation d'une extrémité 19 à l'autre extrémité 20 du chemin de roulement 13. Selon une variante, le chemin de recirculation de billes 14 peut être réalisé en une matière plastique. Le chemin de recirculation peut aussi être fabriqué d'un seul tenant avec le bottier 7 afin de réduire le nombre de pièces à fabriquer. Le chemin de recirculation de billes 14 peut avantageusement être en forme de spire et son agencement par rapport au chemin de roulement 14, lui même essentiellement en forme de spire, peut avantageusement être tel que les deux chemins 13 et 14 présentent en combinaison sensiblement la forme d'un "8", comme on peut mieux le voir sur la Fig. 6. L'encombrement de l'écrou, notamment son épaisseur dans la direction de l'axe de rotation A, est par cette construction particulièrement faible. Cette construction d'un chemin de billes en forme de "8" apporte ses avantages également dans un écrou où le chemin de roulement est fabriqué d'un seul tenant avec les parties de boîtier, sans sortir du cadre de l'invention.

Le dispositif de roulement à billes 4 est disposé dans l'interface 16 entre la première partie de boîtier 8 et la deuxième partie de boîtier 9. Cette interface est formée en évidant à parts sensiblement égales les première et deuxième parties de boîtier 8 et 9 sur une partie de leurs hauteurs, depuis leurs surfaces se faisant face, c'est-à-dire leurs surfaces réceptrices des moyens de fixation précités. Ceci permet d'avoir des opérations d'assemblage du dispositif de roulements à billes au boîtier simples et facilement automatisables.

Il est également à remarquer que dans la forme d'exécution montrée, les deux parties du boîtier ont des formes identiques, ce qui permet de réduire le nombre de pièces différentes à fabriquer, et donc de réduire les coûts de fabrication et de stockage.

## Revendications

1. Dispositif vis-écrou à billes comprenant une vis (2) et un écrou (3), l'écrou comportant un boîtier (7) et un dispositif de roulement à billes (4) comprenant un chemin de roulement (13) et une pluralité de billes (15), le dispositif de roulement à billes (4) étant fabriqué en tant que partie indépendante qui est assemblée avec le boîtier (7), **caractérisé en ce que** le boîtier (7) comprend au moins une première partie de boîtier (8) et une seconde partie de boîtier (9) fixées ensemble, le dispositif de roulement à billes (4) étant disposé dans une interface (16) entre les deux parties de boîtier.

2. Dispositif selon la revendication 1, **caractérisé en ce que** les première et seconde parties de boîtier ont des formes identiques.

3. Dispositif selon l'une des revendications précédentes, **caractérisé en ce que** le boîtier (7) est réalisé en une matière plastique.

4. Dispositif selon l'une des revendications précédentes, **caractérisé en ce que** le chemin de roulement (13) est en tôle emboutie.

5. Dispositif selon l'une des revendications précédentes, **caractérisé en ce que** le chemin de roulement (13) est essentiellement en forme de spire.

6. Dispositif selon l'une des revendications précédentes, **caractérisé en ce que** le chemin de roulement (13) est fabriqué d'au moins deux parties de paroi d'appui (17a, 17b) ayant des formes identiques.

7. Dispositif selon l'une des revendications précédentes, **caractérisé en ce que** le dispositif comprend un chemin de recirculation (14) de billes agencé de manière à assurer la recirculation des billes (15) sur le chemin de roulement (13), le chemin de recirculation (14) de billes étant essentiellement en forme de spire.

8. Dispositif selon la revendication précédente, **caractérisé en ce que** le chemin de recirculation (14) de billes comprend une partie de paroi d'appui (18) fabriquée séparément et assemblée avec le boîtier (7).

9. Dispositif selon l'une des revendications précédentes 7 ou 8, **caractérisé en ce que** le chemin de roulement (13) à billes et le chemin de recirculation (14) de billes forment ensemble un chemin essentiellement sous forme d'un "8".

## Patentansprüche

1. Kugelumlaufspindel, eine Schraube (2) und eine Mutter (3) umfassend, wobei die Mutter ein Gehäuse (7) sowie eine Kugellagervorrichtung (4) aufweist, die eine Lauffläche (13) und eine Mehrzahl von Kugeln (15) umfasst, wobei die Kugellagervorrichtung (4) als ein unabhängiges Teilstück hergestellt wird, das mit dem Gehäuse (7) zusammengefügt wird, **dadurch gekennzeichnet, dass** das Gehäuse (7) zumindest ein erstes Gehäuseteilstück (8) und ein zweites Gehäuseteilstück (9) umfasst, die aneinander befestigt sind, wobei die Kugellagervorrichtung (4) an einer Schnittstelle (16) zwischen den beiden Gehäuseteilstücken angeordnet ist.

2. Vorrichtung nach Anspruch 1, **dadurch gekennzeichnet, dass** das erste und zweite Gehäuseteilstück von identischer Gestalt sind.

3. Vorrichtung nach einem der vorangehenden Ansprüche, **dadurch gekennzeichnet, dass** das Gehäuse (7) aus Kunststoff hergestellt wird.

4. Vorrichtung nach einem der vorangehenden Ansprüche, **dadurch gekennzeichnet, dass** die Lauffläche (13) aus Tiefziehblech besteht.

5. Vorrichtung nach einem der vorangehenden Ansprüche, **dadurch gekennzeichnet, dass** die Lauffläche (13) im Wesentlichen spiralförmig ist.

6. Vorrichtung nach einem der vorangehenden Ansprüche, **dadurch gekennzeichnet, dass** die Lauffläche (13) aus zumindest zwei Abschnitten einer tragenden Wand (17a, 17b) hergestellt wird, die von identischer Gestalt sind.

7. Vorrichtung nach einem der vorangehenden Ansprüche, **dadurch gekennzeichnet, dass** die Vorrichtung einen Weg für die Rückführung (14) der Kugeln umfasst, der so eingerichtet ist, dass er die Rückführung der Kugeln (15) auf die Lauffläche (13) gewährleistet, wobei der Weg für die Rückführung (14) der Kugeln im Wesentlichen spiralförmig ist.

8. Vorrichtung nach dem vorangehenden Anspruch, **dadurch gekennzeichnet, dass** der Weg für die Rückführung (14) der Kugeln einen tragenden Wandabschnitt (18) umfasst, der separat hergestellt und mit dem Gehäuse (7) zusammengefügt wird.

9. Vorrichtung nach einem der vorangehenden Ansprüche 7 oder 8, **dadurch gekennzeichnet, dass** die Lauffläche (13) der Kugeln und der Weg für die Rückführung (14) der Kugeln zusammen einen Weg von im Wesentlichen der Gestalt einer "8" bilden.

## Claims

1. A ball screw-nut device, comprising a screw (2) and a nut (3), the nut comprising a housing (7) and a ball bearing device (4) comprising a ball bearing rail (13) and a plurality of balls (15), the ball bearing device (4) being manufactured as an independent part which is assembled with the housing (7), **characterized in that** the housing (7) comprises, at least, a first housing part (8) and a second housing part (9) which are fastened together, the ball bearing device (4) being placed at an interface (16) between the two housing parts.

2. A device according to claim 1, **characterized in that** the first and the second housing parts are identically shaped.

3. A device according to one of the preceding claims, **characterized in that** the housing (7) is made from a plastic material.

4. A device according to one of the preceding claims, **characterized in that** the ball bearing rail (13) is formed by a drawing operation from a metal sheet.

5. A device according to one of the preceding claims, **characterized in that** the ball bearing rail (13) has substantially the shape of a spire.

6. A device according to one of the preceding claims, **characterized in that** the ball bearing rail (13) is made from at least two supporting wall parts (17a, 17b), which are identically shaped.

7. A device according to one of the preceding claims, **characterized in that** the device comprises a ball recirculation rail (14), arranged in such a manner as to ensure the recirculation of the balls (15) to the ball bearing rail (13), the ball recirculation rail (14) having substantially the shape of a spire.

8. A device according to the preceding claim, **characterized in that** the ball recirculation rail (14) comprises a supporting wall part (18) manufactured separately and assembled with the housing (7).

9. A ball screw-nut device according to claim 7 or 8,**characterized in that** the ball bearing rail (13) and the ball recirculation rail (14) form together a rail, having substantially the shape of an " 8 ".
